# EUROPÄISCHE PATENTANMELDUNG

(11) **EP 0 947 473 A1**
(43) Veröffentlichungstag der Anmeldung: **06.10.1999**
(21) Anmeldenummer: 98103728.6
(22) Anmeldetag: 03.03.1998
(51) Int. Cl.: C02F 3/20, B01F 3/04

(54) **Belüftungsvorrichtung, Kombination einer Belüftungsvorrichtung und einer Haltevorrichtung und Verfahren zum Austauschen einer Belüftungsvorrichtung**

(71) Anmelder: Huber + Suhner AG Kabel-, Kautschuk-, Kunststoffwerke, CH-8330 Pfäffikon (CH)
(72) Erfinder: Cantz, Thomas, 8712 Stäfa (CH)
(74) Vertreter: Hepp, Dieter

(57) **Zusammenfassung**

Eine Belüftungsvorrichtung (1) für Abwasser besteht im wesentlichen aus einem Träger (2) und einer auf den Träger (2) befestigten, luftdurchlässigen Membran (6). Der Träger (2) ist mit wenigstens einem Hohlraum (18) zur Aufnahme eines Beschwerungsmediums (M) versehen. Das Beschwerungsmedium (M) dient zur Kompensation des Auftriebs der Belüftungsvorrichtung (1) in Wasser. Die Belüftungsvorrichtung (1) kann lösbar, form- und kraftschlüssig mit einer Haltevorrichtung (16) am Boden eines Klärbeckens befestigt werden.

## Beschreibung

Die Erfindung betrifft eine Belüftungsvorrichtung, eine Kombination einer Belüftungsvorrichtung und einer Haltevorrichtung sowie ein verfahren zum Austausch einer Belüftungsvorrichtung mit den Merkmalen des Oberbegriffs der unabhängigen Patentansprüche.

Zum Belüften von Abwässern in Klärbecken oder stehendem Wasser im Allgemeinen ist eine vielzahl von verschiedenen Belüftungsanordnungen bekannt. Häufig verwendet werden beispielsweise rohrförmige Belüfter, bei welchen ein Stützrohr mit einer luftdurchlässigen Membran umgeben ist, durch welche die Luft in das zu klärende Wasser austreten kann. Bekannt sind weiter sogenannte Tellerbelüfter, bei welchen ein Stützteller mit einer luftdurchlässigen Membran versehen ist, wobei durch den Stützteller eine Luftzufuhr vorgesehen ist. Eine Vielzahl solcher Tellerbelüfter werden auf einer im Klärbecken verankerten Luftzufuhrleitung befestigt.

Alle diese bekannten Belüftungsvorrichtungen weisen vor allem hinsichtlich der Installation und der Wartung erhebliche Nachteile auf. Hohlräume, insbesondere luftführende Kanäle erzeugen einen erheblichen Auftrieb. Damit sich die Belüfter im Betrieb nicht vom Grund des Klärbeckens lösen, werden sie angeschraubt oder anderweitig dauerhaft befestigt. Eine solche dauerhafte Befestigung erschwert den Austausch der Belüfter zu Reparatur- oder Reinigungszwecken. Zum Austausch muss meist das Klärbecken komplett geleert werden, was zu grösseren Betriebsunterbrechungen führen kann.

Es ist wichtig, dass die Belüftungsvorrichtung ein vorbestimmtes Niveau innerhalb des Klärbeckens einnimmt und hält.

Es ist deshalb eine Aufgabe der vorliegenden Erfindung, die Nachteile des Bekannten zu vermeiden, insbesondere also eine Belüftungsvorrichtung zu schaffen, die einfach befestigbar und austauschbar ist. Eine weitere Aufgabe der vorliegenden Erfindung besteht darin, ein Verfahren zum Austauschen einer Belüftungsvorrichtung zu schaffen, das rasch und einfach durchführbar ist.

Eine Belüftungsvorrichtung für Abwässer mit den Merkmalen der vorliegenden Erfindung besteht im wesentlichen aus einem Träger und wenigstens einer, am Träger befestigten, luftdurchlässigen Membran. Solche Träger und Membranen werden im allgemeinen aus Kunststoffmaterialien gefertigt. Zur Reduktion des Auftriebs der Belüftungsvorrichtung im Wasser weist der Träger wenigstens einen Hohlraum zur Aufnahme eines Beschwerungsmediums auf. Als Beschwerungsmedium kann beispielsweise Sand oder Kies verwendet werden. Vorteilhaft wird das Beschwerungsmedium und das Volumen des Hohlraumes derart gewählt, dass der Auftrieb von Träger und Membran im Wasser im wesentlichen kompensiert wird. Eine exakte Kompensation ist aufgrund der Dynamik in einer solchen Belüftungsvorrichtung kaum zu erreichen, weil das Volumen der Belüftungsvorrichtung im Betrieb schwankt. Je höher der Druck im System ist, desto stärker wölbt sich die Membran und desto grösser sind Volumen und Auftrieb. Im wesentlichen bedeutet dies, dass der Auftrieb mit einer Toleranz von plus/minus 20% kompensiert werden soll. Eine solche Kompensation des Auftriebs erlaubt das Vorsehen einer verhältnismässig einfachen Fixierung der Belüftungsvorrichtung am Boden. Insbesondere wird dabei die Fixierung von den Auftriebskräften der Belüftungsvorrichtung entlastet. Die Fixierung dient also in erster Linie der Positionierung der Belüftungsvorrichtung im Klärbecken.

In einem weiteren Aspekt der Erfindung weist die Belüftungsvorrichtung einen Träger auf, der mit Befestigungsmitteln zum lösbaren, form- und kraftschlüssigen Verbinden mit einer Haltevorrichtung versehen ist. Der lösbare form- und kraftschlüssige Verbund ist insbesondere vorteilhaft als Schnappverbindung ausgebildet. Dies ermöglicht ein rasches Einsetzen der Belüftungsvorrichtungen, wenn die Haltevorrichtungen im Klärbecken montiert sind. Vor allem zur Reparatur können solche Belüftungsvorrichtungen ausgeschnappt und hochgehoben werden, ohne dass das Klärbecken geleert werden muss. Eine neue Belüftungsvorrichtung kann in das Klärbecken abgesenkt und erneut in die Haltevorrichtung eingeschnappt werden. Betriebsunterbrechungen aufgrund der Leerung des Klärbeckens werden damit vermieden. Während eine Schnappverbindung zu besonders einfacher Konstruktion und Handhabung führt, sind andere lösbare, form- und kraftschlüssige Verbindungsmittel denkbar. Wesentlich ist, dass die Verbindungsmittel derart ausgebildet sind, dass sie auch auf Distanz, (d.h. vom Rand des gefüllten Klärbeckens aus) ohne grossen Kraftaufwand geöffnet und geschlossen werden und lokalisiert werden können.

In einem besonders vorteilhaften Ausführungsbeispiel ist der Träger als T-förmiges Profil ausgebildet, auf dessen Unterseite ein im wesentlichen zylindrisches Rohr angebracht ist. Das Rohr ist entlang eines Umfangabschnitts in eine Aufnahmekehle einer Haltevorrichtung einschnappbar.

In einem weiteren bevorzugten Ausführungsbeispiel sind die Befestigungsmittel, insbesondere das Rohr, zur Aufnahme eines Beschwerungsmediums ausgebildet. Insbesondere in Kombination mit einer Belüftungsvorrichtung, welche Hohlräume zur Aufnahme eines Beschwerungsmediums aufweist, ist eine lösbare und form- und kraftschlüssig mit einer Haltevorrichtung verbindbare Belüftungsvorrichtung vorteilhaft. Aufgrund der Kompensation des Auftriebs durch das Beschwerungsmedium kann die lösbare Verbindung verhältnissmässig schwach ausgebildet werden, so dass die Belüftungsvorrichtung mit geringem Kraftaufwand befestigt, insbesondere ein- bzw. ausgeschnappt werden kann.

Besonders vorteilhaft wird das Beschwerungsmedium direkt in das Rohr eingefüllt, welches mit geeigneten Mitteln abgeschlossen werden kann.

Die Belüftungsvorrichtung ist ausserdem vorteilhaft als Linienbelüfter mit einer flachen oder gekrümmten Oberseite des Trägers ausgebildet. Solche flächigen Linienbelüfter mit einer Membran sind beispielsweise im Extrusionsverfahren einfach herstellbar und können in modularer Bauweise eingesetzt werden.

Ein weiterer Aspekt besteht in einer Kombination einer Belüftungsvorrichtung und einer Haltevorrichtung. Eine Kombination von aufeinander abgestimmter Belüftungsvorrichtung und Haltevorrichtung gewährleistet eine besonders einfache Verbindung. Haltevorrichtungen können am Anfang der Installation bei geleertem Klärbecken am Grund des Klärbeckens montiert werden. Die Belüftungsvorrichtungen können anschliessend mit der Haltevorrichtung verbunden, insbesondere in diese eingeschnappt werden. Wesentlich ist, dass die Belüftungsvorrichtung Befestigungsmittel aufweist, welche lösbar und form- und kraftschlüssig mit der Haltevorrichtung verbindbar sind.

Besonders einfach kann die Verbindung mit einem Belüfter mit einem als zylindrisches Rohr ausgebildeten Befestigungsmittel erzielt werden, welches in eine Aufnahmeöffnung mit zwei Greifern in die Haltevorrichtung einschnappbar ist.

Die Haltevorrichtung ist vorzugsweise höhenverstellbar ausgebildet. Auf diese Weise kann die Belüftungsvorrichtung zuerst montiert und erst anschliessend fein nivelliert werden.

Vorteilhaft ist die Belüftungsvorrichtung als länglicher Linienbelüfter ausgebildet, welcher in wenigstens zwei Haltevorrichtungen gehalten wird. Zum Vereinfachen des Einführens der Belüftungsvorrichtung in die Haltevorrichtung kann diese ausserdem mit einer Einführhilfe zum Positionieren der Belüftungsvorrichtung versehen sein.
Die Belüftungsvorrichtung weist einen Luftanschluss auf, durch welchen Luft in die zwischen der Membran und dem Träger gebildeten Luftkammern zugeführt werden kann. Der Luftanschluss ist vorteilhaft über eine flexible Verbindungsleitung mit einer Luftzufuhr ausserhalb des Klärbeckens verbunden. Eine solche flexible Verbindungsleitung unterstützt die einfache Aushebbarkeit der Belüftungsvorrichtung. Die Belüftungsvorrichtung kann einfach aus der Haltevorrichtung ausgeschnappt und aus dem Klärbecken angehoben werden. Die flexible Verbindungsleitung behindert den Austauschvorgang nicht.

In einem Klärbecken sind vorteilhaft eine Vielzahl von einzelnen Belüftungsvorrichtungen angeordnet, welche in modularer Bauweise standardisiert hergestellt und im Klärbecken angeordnet sein können. Jede dieser Belüftungsvorrichtungen ist vorteilhaft einzeln mit der Luftzufuhr verbunden. Falls eine Belüftungsvorrichtung ersetzt werden muss, kann diese einzeln aus dem Klärbecken hochgehoben und von der Luftzufuhr getrennt werden, ohne dass die Luftzufuhr in den übrigen Belüftungsvorrichtungen unterbrochen wird.

Für das erfindungsgemässe Verfahren zum Austauschen einer in einer Haltevorrichtung in einem Klärbecken lösbar gehaltenen Belüftungsvorrichtung ist vor allem wesentlich, dass die Belüftungsvorrichtung in dem gefüllten Klärbecken aus der Haltevorrichtung gelöst wird. Dazu kann eine spezielle Hebe- oder Lösevorrichtung verwendet werden. Die Belüftungsvorrichtung wird anschliessend mit der Hebevorrichtung aus dem Klärbecken hochgehoben und aus diesem entfernt. In einem weiteren Verfahrensschritt wird eine neue oder die reparierte Belüftungsvorrichtung mit der Hebevorrichtung in das Klärbecken abgesenkt und mit der Haltevorrichtung verbunden, vorzugsweise in diese eingeschnappt.

Die Erfindung wird im folgenden anhand der Zeichnungen und in Ausführungsbeispielen näher erläutert. Es zeigen:
- Figur 1: eine erfindungsgemässe Belüftungsvorrichtung im Querschnitt,
- Figur 2: eine in einer Haltevorrichtung gehaltene Belüftungsvorrichtung im Querschnitt,
- Figur 3: eine schematische Darstellung einer höhenverstellbaren Haltevorrichtung,
- Figur 4: eine perspektivische Darstellung einer Haltvorrichtung,
- Figur 5: eine perspektivische Darstellung einer Belüftungsvorrichtung auf zwei Haltevorrichtungen,

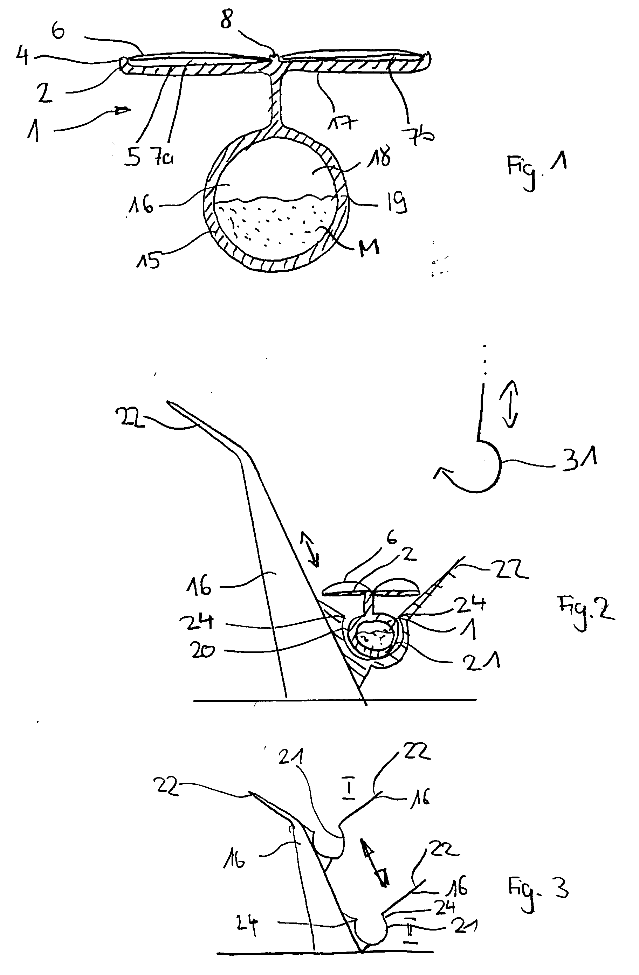

Figur 1 zeigt das Profil einer erfindungsgemässen Belüftungsvorrichtung 1 im Querschnitt. Die Belüftungsvorrichtung 1 besteht aus einem im wesentlichen T-förmigen Träger 2 und einer auf der Oberfläche 4 des Trägers 2 angebrachten Membran 6. Auf der Unterseite 17 des Trägers sind Befestigungsmittel 15 angeordnet, welche in der Form eines Rohres 19 ausgebildet sind. Die Membran 6 ist entlang der Längsseiten 4 mit dem Träger 2 verbunden. Zwischen der Membran 6 und dem Träger 2 sind zwei Luftkammern 7a und 7b eingeschlossen. Die Membran 6 ist zweiteilig ausgebildet und entlang einer Mittellinie 8, welche parallel zu den Längsseiten 4 verläuft mit dem Träger 2 verbunden. Die Ausbildung von zwei räumlich getrennten Luftkammern 7a, 7b vermeidet, dass austretende Blasen sich vereinigen (Koaleszenz).

Die Befestigungsmittel 15 sind mit einem Hohlraum 18 versehen, der zur Aufnahme eines Beschwerungsmediums M dient. Das Beschwerungsmedium M dient zur Kompensation des Auftriebs der Luftkammern 7a, 7b zwischen Träger 2 und Membran 6 in Wasser.

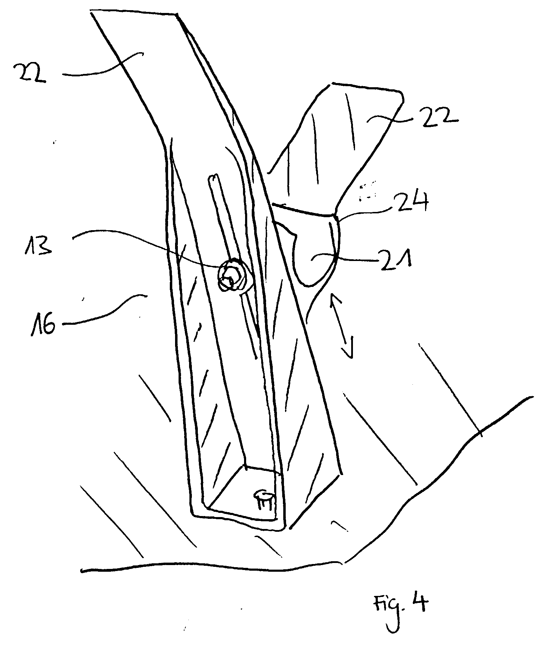

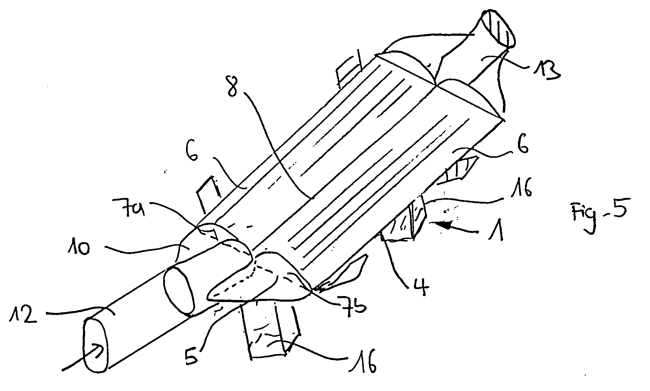

Figur 2 zeigt schematisch eine Haltevorrichtung 16, in welcher eine erfindungsgemässe Belüftungsvorrichtung 1 gehalten wird. Die Haltevorrichtung ist höhenverstellbar ausgebildet, was ein einfaches Nivellieren der Belüftungsvorrichtung 1 erlaubt. Die Belüftungsvorrichtung ist entlang eines Umfangabschnittes 20 des Rohres 19 (siehe Figur 3) in eine Aufnahmeöffnung 21 mit zwei Greifern 24 der Haltevorrichtung 16 eingeschnappt. Einführhilfen 22 sind vorgesehen, welche das Einsetzen der Belüftungsvorrichtung 1 in die Haltevorrichtung 16 erleichtern. Schematisch ist in Figur 4 eine Hebevorrichtung 31 dargestellt, mittels welcher die Befestigungsvorrichtung 1 unterfasst, aus der Haltevorrichtung 16 ausgeschnappt und aus dem Klärbecken gehoben werden kann.

Figur 3 zeigt schematisch eine höhenverstellbare Haltevorrichtung 16 in einer oberen Stellung I und in einer unteren Stellung II. Die Haltevorrichtung weist eine Aufnahmeöffnung 21 mit zwei Greifern 24 für eine Belüftungsvorrichtung und zwei Arme 22 als Einführhilfe für die Belüftungsvorrichtung 1 auf. Die Greifer 24 bilden eine Hinterschneidung, hinter die die Belüftungsvorrichtung einschnappt.

In Figur 4 ist die Haltevorrichtung 16 perspektivisch dargestellt. Die Höhe der Halterung kann beispielsweise mit einer Stellschraube 23 eingestellt werden.

Figur 5 zeigt schematisch eine erfindungsgemässe Belüftungsvorrichtung 1, welche auf zwei Haltevorrichtungen 16 montiert ist. Die Belüftungsvorrichtung 1 weist zwei Luftkammern 7a und 7b auf. Die Luftkammern 7a,7b sind auf der einen Seite durch ein Endstück 13 abgeschlossen und auf der anderen Seite durch einen Luftanschluss 10 und über eine flexible Verbindungsleitung 12 mit einer Luftzufuhrleitung 11 verbunden. Dank dieser Konstruktion kann die Belüftungsvorrichtung 1 als Extrusionsprofil in beliebiger Länge hergestellt werden. Die Luftzufuhr erfolgt auf den Stirnseiten der Belüftungsvorrichtung 1.

Im Klärbecken 30 sind beispielsweise fünf Belüftungsvorrichtungen 1 angeordnet. Die Belüftungsvorrichtungen 1 sind in modularer Bauweise in Modulen mit verschiedenen Längen ausgeführt. Diese Bauweise ermöglicht ein individuelles Bestücken des Klärbeckens 30 mit Belüftungsvorrichtungen 1. Die Belüftungsvorrichtungen 1 sind lösbar auf je zwei Haltevorrichtungen 16 form- und kraftschlüssig gehalten, was ein leichtes Montieren und Entfernen der Belüftungsvorrichtung 1 ermöglicht. Jede der Belüftungsvorrichtungen 1 ist über einen flexiblen Luftzuführschlauch 12 mit einer Luftleitung 11 verbunden.

Der Träger 2 ist vorzugsweise aus Polypropylen gefertigt. Die Membran kann aus einem thermoplastischen Elastomer wie beispielsweise Santoprene gefertigt werden. Die einzelnen Module der Belüftungsvorrichtung 1 weisen typischerweise eine Länge von 1 bis 8 Metern auf. Die Dicke der Membran 6 beträgt zwischen 1 und 3mm, die Dicke des Trägers 2 ca. 4 bis 6mm. Die Luftkammern sind je ca. 50 bis 150mm breit, was zu einer Totalbreite bei zwei Luftkammern 7a, 7b von 100 bis 300mm führt. Als Beschwerungsmedium M wird vorzugsweise Sand verwendet. Es sind aber auch andere Materialien wie Kies, Steine, Beton etc. denkbar.

## Patentansprüche

1. Belüftungsvorrichtung (1) für Wasser, insbesondere Abwasser mit einem Träger (2) und wenigstens einer am Träger (2) befestigten luftdurchlässigen Membran (6), wobei zwischen dem Träger (2) und der Membran (6) wenigstens eine Luftkammer (7a, 7b) gebildet wird, dadurch gekennzeichnet, dass der Träger (2) mit wenigstens einem Hohlraum (18) zur Aufnahme eines Beschwerungsmediums (M) versehen ist.

2. Belüftungsvorrichtung nach Anspruch 1, dadurch gekennzeichnet, dass das Beschwerungsmedium (M) und das Volumen des Hohlraums (18) derart ausgewählt werden, dass der Auftrieb der Luftkammer (7a, 7b) zwischen Träger (2) und Membran (6) im Wasser im wesentlichen kompensiert wird.

3. Belüftungsvorrichtung (1), insbesondere nach einem der Ansprüche 1 oder 2, mit einem Träger (2) und wenigstens einer, am Träger (2) befestigten, luftdurchlässigen Membran (6), wobei der Träger (2) und die Membran (6) wenigstens eine Luftkammer (7a, 7b) umschliessen, dadurch gekennzeichnet, dass der Träger (2) mit Befestigungsmitteln (15) zum lösbaren, form- und kraftschlüssigen Verbinden mit einer Kaltevorrichtung (16) versehen ist.

4. Belüftungsvorrichtung (1) nach Anspruch 3, dadurch gekennzeichnet, dass die Befestigungsmittel (15) als im wesentlichen zylindrisches Rohr (19) ausgebildet sind, welches entlang eines Umfangabschnitts (20) in die Haltevorrichtung (16) einschnappbar ist.

5. Belüftungsvorrichtung nach Anspruch 4, dadurch gekennzeichnet, dass das Rohr (19) zur Aufnahme eines Beschwerungsmedium (M) ausgebildet ist.

6. Belüftungsvorrichtung nach einem der Ansprüche 1 bis 5, dadurch gekennzeichnet, dass die Luftkammer (7a, 7b) einen Luftanschluss (10) aufweist, der mit einer flexiblen Verbindungsleitung (12) mit einer Luftzufuhrleitung (11) verbindbar ist.

7. Haltevorrichtung zum Fixieren einer Belüftungsvorrichtung, insbesondere nach einem der vorangehenden Ansprüche, gekennzeichnet durch eine Greifer-Anordnung (21,24), in welche die Belüftungsvorrichtung einschnappbar ist.

8. Haltevorrichtung nach Anspruch 7 dadurch gekennzeichnet, dass die Greifer-Anordnung (21,24) eine Einführhilfe (22) aufweist.

9. Haltevorrichtung nach Anspruch 8, dadurch gekennzeichnet, dass die Einführhilfe (22) als seitliche Verlängerung der Greifer-Anordnung (24) ausgebildet sind.

10. Kombination einer Belüftungsvorrichtung (1) insbesondere nach einem der Ansprüche 1 bis 6, und einer Haltevorrichtung, insbesondere nach Anspruch 7 bis 9, dadurch gekennzeichnet, dass die Belüftungsvorrichtung Befestigungsmittel (15) aufweist, welche lösbar und form- und kraftschlüssig mit der Haltevorrichtung (16) verbindbar sind.

11. Kombination nach Anspruch 10, dadurch gekennzeichnet, dass die Befestigungsmittel (15) als ein im wesentlichen zylindrisches Rohr (19) ausgebildet sind, welches in eine durch wenigstens zwei Greifer (24) gebildete Aufnahmeöffnung (21) in der Haltevorrichtung (10) einschnappbar ist.

12. Kombination nach einem der Ansprüche 10 oder 11, dadurch gekennzeichnet, dass die Haltevorrichtung (16) höhenverstellbar ausgebildet ist.

13. Kombination nach einem der Ansprüche 10 bis 12, dadurch gekennzeichnet, dass die Haltevorrichtung (16) eine Einführhilfe (22) zum Positionieren der Belüftungsvorrichtung (1) aufweist.

14. Verfahren zum Austausch einer in einer Haltevorrichtung (16) lösbar gehaltenen Belüftungsvorrichtung (1), in einem während des Austauschs gefüllten Klärbecken (30), bestehend aus den Schritten:
- Lösen der Belüftungsvorrichtung (1) aus der Haltevorrichtung (16) mit einer Hebevorrichtung (31)
- Hochheben der Belüftungsvorrichtung (1) mit der Hebevorrichtung (31)
- Absenken einer neuen oder der reparierten Belüftungsvorrichtung (1) mittels der Hebevorrichtung (31)
- Lösbares Verbinden der Belüftungsvorrichtung (1) mit der Haltevorrichtung (16).
